# EUROPEAN PATENT SPECIFICATION

(11) **EP 2 283 271 B1**
(45) Date of publication and mention of the grant of the patent: **22.07.2015**
(21) Application number: 09741601.0
(22) Date of filing: 08.05.2009
(51) Int. Cl.: F16P 1/02

(54) **USE OF A MESH PANEL FOR SCREENING A USER FROM DIRECT IMPACT OF A HIGH PRESSURE FLUID BY DIFFUSING THE FLUID STREAM**
VERWENDUNG EINES GITTERS ZUR ABSCHIRMUNG EINES BENUTZERS VOR DER DIREKTEN EINWIRKUNG EINER HOCHDRUCKFLÜSSIGKEIT MITTELS DIFFUSION DES FLÜSSIGKEITSSTROMS
UTILISATION D'UN FILET POUR PROTÉGER UN UTILISATEUR DE L'IMPACT DIRECT D'UN FLUIDE HAUTE PRESSION PAR DIFFUSION DU COURANT DE FLUIDE

(30) Priority: 08.05.2008 AU 2008902244
(43) Date of publication of application: 16.02.2011
(73) Proprietor: Piggott, Andrew, New South Wales 2291 (AU)
(72) Inventor: PIGGOTT, Andrew, Merewether New South Wales 2291 (AU); WESTON, David Leslie, Swansea New South Wales 2281 (AU)
(74) Representative: Patentanwälte Ruff, Wilhelm, Beier, Dauster & Partner
(86) International application number: PCT/AU2009/000583
(87) International publication number: WO 2009/135272

(56) References cited:
- EP-A2- 0 034 486
- DE-A1- 3 405 346
- JP-A- 9 229 297
- JP-A- 9 229 297
- US-A- 5 640 747
- WIKIPEDIA: '''Water jet cutter'' - pressures disclosed up to 90,000psi (621MPa).', [Online] XP008146052 Retrieved from the Internet: <URL:http://en.wikipedia.org/wiki/Water_jet _cutter>

## Description

### Technical Field

Disclosed is a method and a use of a mesh panel and of a screening apparatus for the screening of high pressure fluids, especially hydraulic fluids, and especially in mining (e.g. underground) and civil construction, and related applications. However, it should be appreciated that the method and uses can readily be adapted for use in the many other applications of high pressure fluids.

### Background Art

Hoses, pipes and tubes that carry high pressure fluids can be prone to rupture, especially when they are required to be formed from a flexible material for a given application. Machinery and tools that are powered by hydraulic fluid (e.g. as employed in underground mining, civil construction and related applications) can be supplied with hydraulic fluid in hoses, lines, etc at pressures of 34,500-41,300 kPa (5000-6000 psi) or even greater. Should a hose rupture occur that takes the form of a small so-called "pinhole", the issuing jet of fluid can have a needle-like profile. Such a fluid jet can function like a lance or needle and can penetrate/pierce right through a human body, resulting in death or serious injury. In this regard, when the injury is not fatal, the high pressure fluid can nevertheless flow into and through the body cavities, and can destroy the veins, arteries, muscles, ligaments and other passages in the human body.

Attempts have been made in the art to prevent a jet of fluid issuing from high pressure fluid carrying hoses that rupture in use. These attempts have centred around either a structural reinforcing of the hose itself or a sheathing to capture an issuing jet of fluid.

For example, WO 2003/31455 discloses a woven stocking for surrounding a high pressure hose and that is adapted to retain fluid that issues from a hose rupture within an envelope surrounding the hose.

Similarly, WO 2001/42703 discloses a woven porous sleeve that surrounds a hose. The sleeve includes cables projecting therefrom to be connected to anchoring points to prevent hose lashing and flailing after hose rupture. The sleeve also functions to retain hydraulic fluid therein in the case of rupture.

JP 09-229297 is directed to a wire net having a smaller mesh size than the cross sectional area of a water jet stream jetted from the nozzle of a water jet cutting machine. The purpose of this is to block the water jet stream from exiting the water jet cutting machine, while allowing the operator to view said water jet stream.

US 5640747 discloses a curtain apparatus with one or more mesh curtains incorporated into a hood structure, such as an industrial furnace. During descaling operations in an industrial furnace, water is sprayed on to bars, rods, strips, etc, causing scale particles and other flying matter to impact the mesh. The curtain apparatus acts to block these scale particles from exiting the furnace.

### Summary of the Disclosure

In a first aspect there is provided a use of a mesh panel in screening a user from direct impact of a high pressure fluid issuing from a pinhole in a high pressure hose, pipe or tube, said high pressure fluid being a pinhole jet of fluid. The mesh of the panel is adapted for receiving and diffusing the high pressure fluid therethrough when positioned at a location that is separated from where the high pressure fluid issues.

In one form the mesh panel can be adapted for being mounted to a frame.

In a second aspect there is provided a use of a screening apparatus for screening a user from direct impact of a high pressure fluid. The apparatus comprises:
- a mesh panel as defined in the first aspect; and
- a frame for supporting the mesh in a spaced relationship to a location from which the high pressure fluid issues.

It has been discovered that if a high pressure fluid (such as a hydraulic fluid at 34,500 kPa (5000psi) or greater) is attempted to be restrained at or by a woven sleeve or stocking that surrounds a hose, pipe or tube that carries the high pressure fluid, the sleeve/stocking material can readily rupture, whereby a pinhole jet of fluid can still issue from the hose, pipe or tube.

However, it has been surprisingly discovered that if a high pressure fluid is allowed to pass through a mesh and is also caused to diffuse at the same time, then both the fluid's energy and the pinhole fluid jet itself can be dissipated/dispersed. In this regard, the mesh of the panel can be selected and adapted such that, rather than restraining the fluid, it allows it to pass but at the same time diffuses it.

Thus, the death from pinhole fluid injection into a user can be eliminated.

Injury from fluid contact can also be eliminated or substantially ameliorated (though in the latter case, provided that protective clothing and eyewear is being worn to protect against diffused fluid).

In one form the mesh is formed from metal wire, to provide dimensional stability, environmental resistance and robustness in industrial applications. The mesh is usually woven. Whilst it is conceivable that at some (e.g. lower) fluid pressures that a polymer or other material mesh may be considered, in industrial applications metal meshes are favoured. In one embodiment, for example, in applications where there exists high levels or moisture or corrosive media, the mesh can be formed from stainless steel wire, though other corrosion resistant metals can be employed for the mesh (e.g. such as copper, galvanised steel wire etc).

Especially for hydraulic fluid at high fluid pressures (e.g. around 34,500 kPa (5000 psi) or greater) the mesh aperture size can be selected to be around 0.25mm or greater. For hydraulic fluid at higher fluid pressures (e.g. around 41,300 kPa (6000 psi) or greater) the mesh aperture size can be selected to be around 0.3mm or greater. It has been observed that when an aperture size of less than 0.25mm is employed then the mesh can restrict fluid flow therethrough to the point where resultant back-pressure can cause the mesh to rupture. It has also been observed that when an aperture size that is considerably greater that 0.3mm is employed then the mesh does not function to sufficiently diffuse the pinhole jet of fluid, whereby the fluid can retain its energy and human injury can still result. Thus, mesh size selection involves due consideration and optimisation to produce a diffusion effect for the given fluid, the given fluid pressure, the likely rupture scenario and the given application.

An optimal aperture size range for a hydraulic fluid at a pressure of around 34,500 kPa (5000 psi) has been observed to be 0.26 - 0.31mm, optimally in a woven stainless steel mesh. Also, when the mesh aperture size is 0.26mm an optimal wire diameter has been observed to be 0.16 mm, and when the mesh aperture size is 0.31 mm an optimal wire diameter has been observed to be 0.2 mm.

An optimal aperture size range for a hydraulic fluid at a pressure of around 41,300 kPa (6000 psi) has been observed to be 0.31 - 0.415mm, optimally in a woven stainless steel mesh. Also, when the mesh aperture size is 0.31mm an optimal wire diameter has been observed to be 0.2 mm, and when the mesh aperture size is 0.415mm an optimal wire diameter has been observed to be 0.22 mm.

The entire panel or edge(s) of the mesh panel can optionally be reinforced for fastening with respect to the frame. This can allow the mesh to be adequately supported at a remote location, and restrained and stabilised for fluid impact, and to resist other inadvertent impacts. For example, the entire panel or at least the edge(s) of the mesh can be reinforced with a polymeric rubber that is attached (e.g. moulded, adhered, cold-rolled etc) thereat. The mesh panel can also be provided with a series of holes (e.g. eyelets) along it edge(s) for enabling its fastening to the frame (e.g. by bolting, tying, staple toggles etc).

When the entire mesh panel is coated on one or both sides with the polymeric rubber this can provide for maximum mesh protection during ordinary use. Then, at high pressure fluid impact, the rubber coating can simply disintegrate to expose the mesh, with fluid diffusion still occurring as the fluid travels through the mesh. The polymeric rubber can be vulcanised. A particular suitable rubber is vulcanised and calendered styrene butadiene rubber (SBR) because of its high tensile strength, abrasion resistance, and moderate ozone and ageing resistance.

In one form the frame can be arranged at and/or can form part of a cage for screening the user in use.

Whilst the location from which the high pressure fluid issues can typically comprise a hole (e.g. a pinhole) in a high pressure hose, pipe or tube, the high pressure fluid can issue forth from other sources, such as leakages in pipe/tube couplings and joiners, from hydraulically or pneumatically powered equipment itself, from pumps etc. Thus, the mesh can be sized and/or shaped for spaced positioning in relation to such apparatus/sources.

When the location from which the high pressure fluid issues is a high pressure hose, pipe or tube, the high pressure fluid can be a hydraulic fluid (e.g. a fluid formed from a synthetic compound, from a mineral oil, from water, or from a water-based mixture), with the fluid being at a pressure of around 34,500 kPa (5000psi) or greater in use. The fluid may alternatively comprise a high pressure gas, or another pressurised liquid not necessarily being employed to power hydraulic equipment.

In a third aspect there is provided a method for screening a user from direct impact of a high pressure fluid issuing from a pinhole in a high pressure hose, pipe or tube, said high pressure fluid being a pinhole jet of fluid. The method comprises the steps:
- selecting a mesh that is adapted to the fluid whereby the fluid is diffused by the mesh as it passes through a given aperture thereof;
- positioning the mesh at a location that is separated from where the high pressure fluid issues.

As with the screening apparatus and mesh panel of the first and second aspects, when a high pressure fluid is caused to diffuse at a spaced location, then both the fluid's energy and e.g. a pinhole fluid jet can be dissipated/dispersed. In this regard, the method of the third aspect can employ the mesh panel or screening apparatus of the first and second aspects.

The mesh can be supported by mounting it to a frame. Such a frame can be arranged at a cage that at least partially surrounds the user in use. In this way, a user can be protected from catastrophic injury whilst working in the vicinity of high pressure fluid lines.

With the method of the third aspect, the mesh aperture size can be selected to be suitable for a given fluid, so as to optimise high pressure fluid diffusion through the mesh. For example, for a high pressure hydraulic fluid at a pressure of around 34,500 kPa (5000psi), the mesh aperture size can be selected to be around 0.25mm or greater (e.g. in the range of 0.26 - 0.31mm). For a high pressure hydraulic fluid at a pressure of around 41,300 kPa (6000 psi), the mesh aperture size can be selected to be around 0.3mm or greater (e.g. in the range of 0.31 - 0.415mm).

With the method of the third aspect, the mesh material can also be selected to be suitable to the given application. For example, in wet and/or corrosive environments the mesh can comprise stainless steel wire woven into a mesh form. Stainless steel is also washable. Other metals that are resistant to corrosive media and moisture can alternatively be employed for the mesh.

In the method of the third aspect, when the location from which the high pressure fluid issues is a hole (e.g. a pinhole) in a high pressure hose, pipe or tube, the diffusion is effected remotely from the hose, pipe or tube. The mesh positioning that is ultimately selected can take into account whether the mesh needs to be suitably supported and located adjacent to where a user is operating.

### Brief Description of the Drawings

Notwithstanding any other forms which may fall within the scope of the uses and method as set forth in the Summary, a number of specific embodiments will now be described, by way of example only, with reference to the accompanying drawings in which:
Figure 1 shows a front view of a first mesh panel embodiment, with the Figure 1A inset detailing the mesh of the panel;
Figure 2 shows the mesh panel embodiment of Figure 1, but with a polymeric reinforcement applied to the perimeter;
Figures 3A to 3E respectively show front views of further mesh panel variations on the embodiment of Figure 1;
Figures 4A and 4B respectively show two different screening apparatus configurations incorporating the mesh panel of Figure 1;
Figure 5 shows a schematic cross-sectional view of a screening apparatus in operation with respect to a high pressure fluid leak from a hose/line; and
Figure 6 shows a schematic cross-sectional view of a mesh sleeve located to surround a high pressure fluid leak from a hose/line.

### Detailed Description of Specific Embodiments

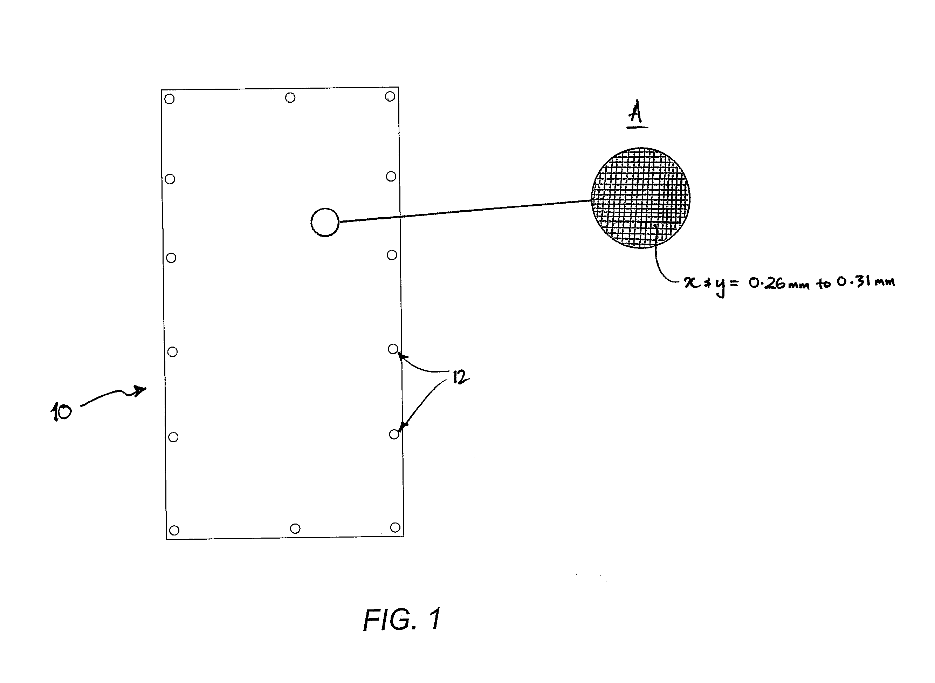

Referring firstly to Figure 1, a first embodiment of a mesh is shown in the form of a mesh panel 10 that is suitable for use in a screening apparatus. The mesh panel 10 is adapted for screening a user from being directly impacted by a high pressure fluid such as a hydraulic fluid at a pressure of 34,500 kPa (5000psi) or greater. More specifically, the mesh panel 10 is adapted for diffusing the high pressure fluid as it passes through the mesh. As a result of this diffusion the fluid's energy is dissipated/dispersed.

Furthermore, and especially when the fluid stream is in the form of a pinhole jet of fluid, the mesh panel 10 is adapted such that, as the pinhole fluid jet passes through the mesh its fluid profile is dissipated/dispersed. Pinhole fluid injection into a user can thus be eliminated, so that death and serious injury of the user can be eliminated. This of course assumes that the user is wearing protective clothing and eyewear so that the user is still protected against spraying by the diffused hydraulic fluid.

The mesh of panel 10 is usually formed from a woven metal wire, to provide dimensional stability, environmental resistance and robustness in industrial applications. It is noted that for certain lower fluid pressures (e.g. hydraulic fluid pressures in the range of 2400-5200 kPa (350 - 750psi)) a woven polymer mesh (e.g. of Kevlar or the like) or meshes of other woven materials may be considered, but in heavy industrial applications where high fluid pressure are required then metal meshes are favoured. Particularly in applications where there exist high levels or moisture or corrosive media (acidic waters in underground mines) the mesh can be formed from a moisture and corrosive-resistant metal such as stainless steel, and metal meshes of copper, galvanised steel, etc may also be suitable in certain such applications.

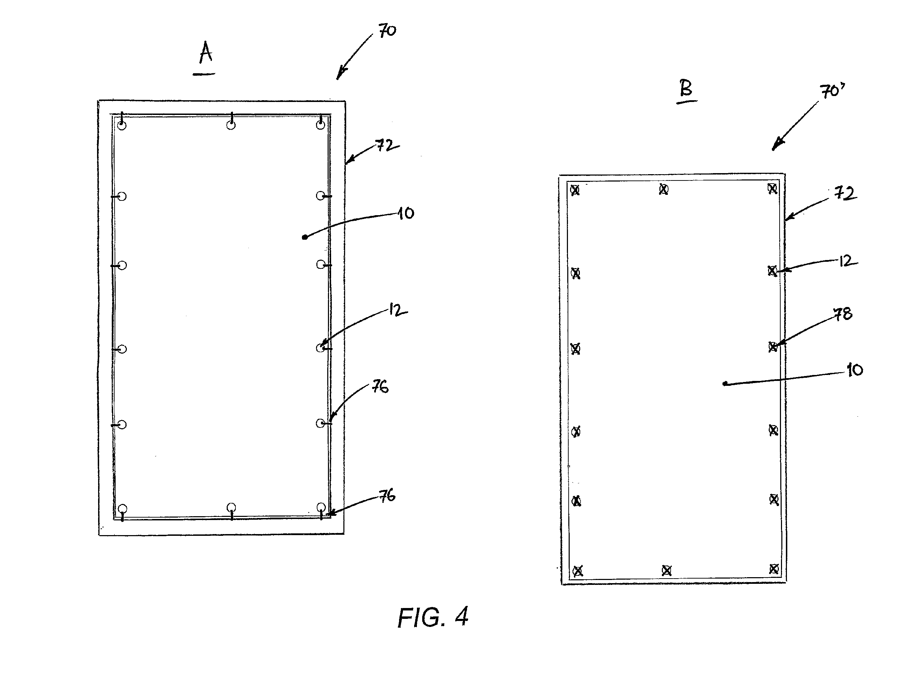

The panel 10 is provided with a series of holes in the form of eyelets 12 spaced apart along its edges for enabling fastening of the mesh to a frame (e.g. by bolting, screwing, riveting, wire-tying etc) - see Figures 4A and 4B. For example, the entire panel or at least the edge(s) of the mesh can be reinforced with a polymeric rubber that is attached (e.g. moulded, adhered, cold-rolled etc) thereat. The mesh can also be provided with a series of holes (e.g. eyelets) along its edge(s) for enabling its fastening to the frame (e.g. by bolting, tying, staple toggles etc).

Usually the entire mesh comprises a polymeric rubber coating on at least one but typically on both sides thereof. This can provide for maximum mesh protection, product integrity and wear-resistance during ordinary use (e.g. handling, installation, when contacted by users and machinery, when impacted by flying debris, etc). The polymeric rubber coating also allows the mesh to be adequately restrained and stabilised (e.g. when mounted to a frame) and enhances the hang strength of the mesh panel. However, at high pressure fluid impact, the rubber coating simply disintegrates to expose the mesh, with fluid diffusion then occurring as the fluid travels through the mesh.

The polymeric rubber is typically vulcanised to increase it strength, abrasion resistance etc. A particularly suitable rubber is vulcanised and calendered styrene butadiene rubber (SBR) because of its fire-resistance, chemical-resistance, anti-static properties (especially important in underground applications of the panel), high tensile strength, abrasion resistance, and moderate ozone and ageing resistance. An alternative polymer rubber is a nitrile rubber (copolymer of acrylonitrile and butadiene).

A suitable rubber is supplied by Apex Fenner (rubber 2618 SBR (TM)), finding previous applications with pulleys and conveyor belting.

The polymeric rubber coating can be applied as a sheet to each side (e.g. the sheet can be adhesively fastened, hot-rolled or cold-rolled onto a respective side of the mesh) or it can be moulded thereto (e.g. by injection or rotor moulding etc). The coating method can also employ hot vulcanising, cold vulcanising or moulded vulcanising (as described below).

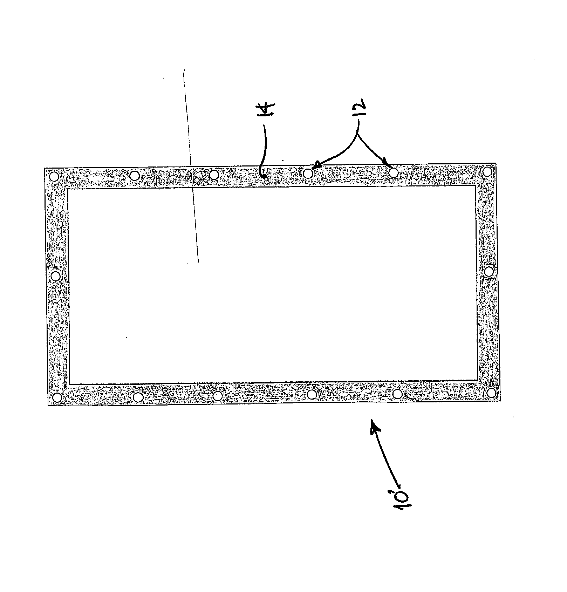

Referring now to Figure 2, a variation on the panel 10 of Figure 1 is shown as mesh panel 10'. In this panel just the edges of the mesh are reinforced for mounting and fastening with respect to a frame. The reinforcing protects the panel edges, and prevents mesh fraying at the edges and at eyelets 12. The edges are reinforced with a polymeric rubber 14 that is moulded or otherwise fastened around the edges (i.e. on both sides of the panel).

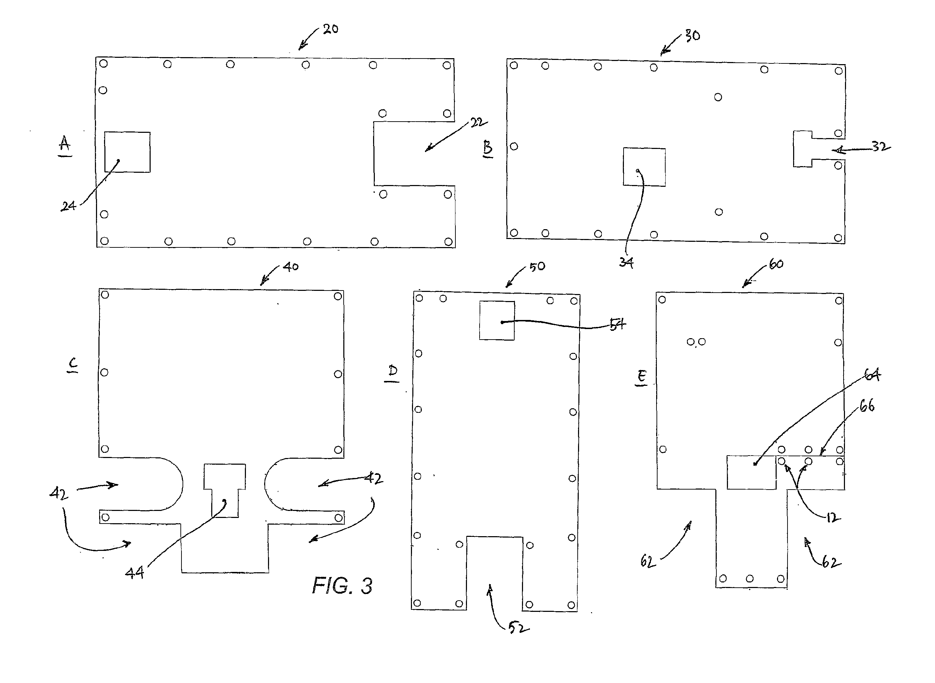

Referring now to Figures 3A to 3E, five different mesh panel configurations 20, 30, 40, 50 and 60 are shown. Each panel is shaped for positioning at a different respective location in relation to a user, so as to effectively screen the user from high pressure fluid impact.

In this regard, such a user may be an operator that operates drilling or tunnelling equipment in underground mining or tunnelling operations. Such equipment is typically powered by hydraulic fluid supplied at very high pressures (34,500 kPa (5000psi) or greater) via a series of high pressure fluid lines or hoses, which tend to surround and be positioned around a protective framework for the operator, such as a cage. The different mesh panel configurations 20, 30, 40, 50 and 60 are shaped for mounting at different parts of the cage. For example, each panel comprises cut-outs 22, 32, 42, 52 and 62 at one or more edges thereof, for close positioning next to equipment located at the cage. Also, each panel comprises an aperture 24, 34, 44, 54 and 64 therethrough for equipment etc access. The aperture 64 also has a slit 66 for passing an equipment part into the aperture, and that is closed once the panel is mounted, by fastening at the adjacent close-spaced eyelets 12. The panels can be customised as user and machinery requirements dictate.

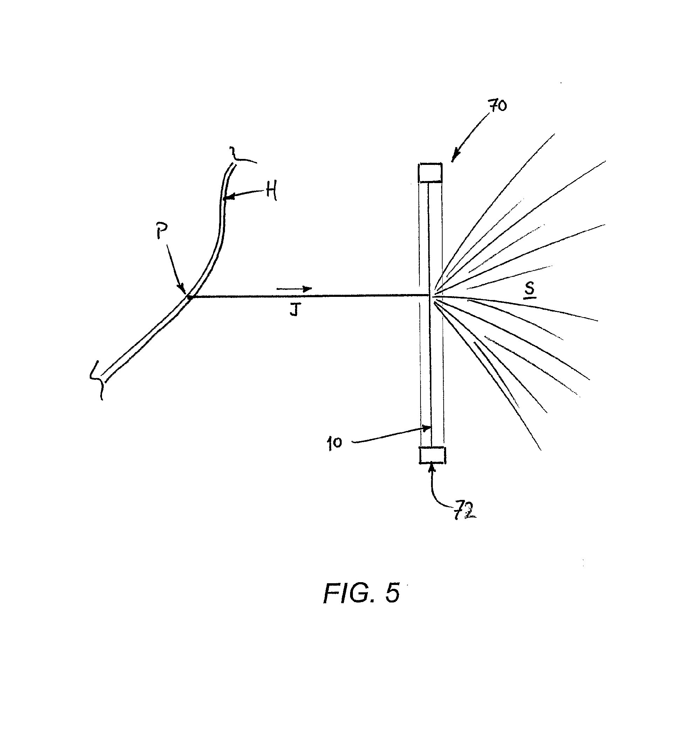

Referring now to Figures 4A, 4B and 5, a screening apparatus 70, 70' is shown that comprises a frame 72 for supporting the mesh panel 10 at a location that is spaced with respect to a high pressure fluid line H (Figure 5).

In the screening apparatus 70 of Figure 4A the mesh panel 10 is located within the perimeter of frame 72 and is mounted thereto by wire ties 76.

In the screening apparatus 70' of Figure 4B the mesh panel 10 is located against the perimeter of frame 72 and is mounted thereto by bolts, screws, rivets, or toggle latches 78.

The frame 70, 70' can be arranged at and/or can form part of a cage for screening an operator. The operator can operate drilling or tunnelling equipment in underground mining or tunnelling operations.

Referring specifically to Figure 5 a high pressure pinhole fluid jet J is shown issuing out of a pinhole P in a high pressure fluid hose or line H. The jet is shown impacting and passing through the apertures of the mesh panel 10 and, as it passes, diffusing/dispersing as a spray stream S. Thus, the fluid profile of the jet J is dissipated/dispersed, as is the energy (force) of the jet.

Referring now to Figure 6, an alternative embodiment of a mesh is shown in the form of a mesh sleeve 100 that has been suitably positioned to surround a high pressure fluid line L such as a hose, pipe or tube. The sleeve can also be sized to surround bundles (e.g. bonded sets) of high pressure hoses. Edges of the sleeve are overlapped at the sleeve join so as not to represent an potential area of weakness.

When positioned to surround a high pressure fluid line L, again the mesh sleeve 100 can screen a user from being directly impacted by a high pressure fluid that leaks from the line 102 (e.g. as a pinhole hydraulic fluid jet at a pressure of 34,500 kPa (5000psi) or greater). Again, the mesh sleeve 100 is adapted for diffusing the high pressure fluid as it passes through the mesh. As a result of this diffusion the fluid's energy is dissipated/dispersed and death/injury prevented.

In this regard, in Figure 6 a high pressure pinhole fluid jet J is shown issuing out of a pinhole P in a high pressure fluid line L. The jet is shown impacting and passing through the apertures of the mesh sleeve 100 and, as it passes, diffusing/dispersing as a spray stream S. Thus, the fluid profile of the jet J is dissipated/dispersed, as is the energy (force) of the jet.

The mesh sleeve 100 is schematically shown as being spaced from the high pressure fluid line L, to illustrate the diffusion of jet J. In practice, the sleeve 100 would typically be closely located against the high pressure fluid line L.

### Example 1

A non-limiting Example of forming a panel as disclosed herein will now be provided.

In the panel forming process a mesh comprising a market grade (316 grade) woven stainless steel mesh was cut to an approximate panel size of 1000mm x 1500mm. A process of hot vulcanising an SBR rubber sheet of approximately 1.5mm thickness onto the mesh comprised the following steps:
1. The mesh and the suitably sized SBR rubber sheet were brushed with a cement bonding solution. A suitable bonding solution employed was a "two-pack" rubber cement of Toyo Tyre & Rubber having the manufacturer's code F2444 (UN No. 1287).
2. The solution was allowed to "tact" off (i.e. go tacky).
3. The rubber sheet was applied to one side of mesh.
4. Steps 1-3 were repeated for the other side of the mesh with another suitably sized SBR sheet.
5. The product from 4. was clamped and autoclave cured (at 150°C and at a pressure 400 kPa). The autoclave curing time was approximately 30 mins.
6. Sections of the resulting cured screen were then "buff overlapped".
7. The screen was washed down with a chemical cleaner to remove any excess rubber and glue contaminants.
8. As desired a stencil was applied a label was painted on the finished product.

The forms of vulcanising that were able to be employed included hot vulcanising (using heat and pressure to bond the rubber onto the mesh); cold vulcanising in which the rubber was bonded to the mesh by adhesive only; and moulded vulcanising (which used heat and pressure to bond the rubber onto the mesh, and employed moulds and tooling to facilitate the process).

### Example 2

A non-limiting Example of the mesh in use in accordance with the screening method disclosed herein will now be provided.

Firstly, a mesh for the mesh panel was selected that was suitable for screening against a hydraulic fluid comprising a water-based mixture with mineral oil, (95% water, 5% mineral oil).

In an underground mining and tunneling trial, it was noted that such a fluid was subjected to high fluid pressures of up to 34,500 kPa (5000 psi), and sometimes 41,300 kPa (6000 psi), in fluid lines used to power much of the mining and tunneling equipment. This included fluid lines to the stage loaders, belt headings, roof supports, and cutting machines and shearers. It was observed in a typical longwall mining operation that around 9500 high fluid pressure fluid lines were employed across a longwall of approximately 250m width and 3 km length. It was further noted that the most common form of fluid line failure was a so-called pinhole failure, whereby an approximately 2mm pinhole jet ejected forth at high pressure. If the jet were to pierce into a human user, fluid flow into the body cavity was observed to be as much as 20 litres/sec.

The mesh selected comprised a market grade (316 grade) woven stainless steel mesh of an approximate panel size 1000mm x 1500mm. Such stainless steel mesh was observed to be readily available and suitable for use in the usual wet and corrosive conditions often present in underground mining and tunneling operations. Stainless steel was also observed to be washable for servicing of the screening apparatus.

To determine the mesh aperture size a selection protocol involved optimising the mesh aperture to produce a maximum diffusion effect for the given fluid, the given fluid pressure, and a likely rupture scenario in the given application.

For a hydraulic fluid comprising a water-based mixture with mineral oil, at a pressure of approximately 34,500 kPa (5000 psi), an optimal mesh aperture size was selected to be in the range of 0.25mm or greater. For a similar hydraulic fluid at a pressure of approximately 41,300 kPa (6000 psi), an optimal mesh aperture size was selected to be in the range of 0.3mm or greater.

In practice, for the 316 grade woven stainless steel mesh, an optimal aperture size range for the hydraulic fluid at a pressure of approximately 34,500 kPa (5000 psi) was observed to be 0.26 to 0.31 mm (ie. x and y dimensions generally both the same and within this range, as depicted in Figure 1A). An optimal wire diameter to produce an aperture size of 0.26mm was 0.16 mm, and an optimal wire diameter to produce an aperture size of 0.31mm was 0.2 mm. For hydraulic fluid at a pressure of approximately 41,300 kPa (6000 psi), optimal aperture size was observed to be 0.31 to 0.415mm (ie. x and y dimensions generally both the same and within this range). An optimal wire diameter to produce an aperture size of 0.31mm was 0.2 mm, and an optimal wire diameter to produce an aperture size of 0.415mm was 0.22 mm.

It was further observed that when the aperture size was less than 0.25mm then the mesh tended to restrict fluid flow therethrough, to the point where back-pressure caused the mesh to rupture. It was also observed that when an aperture size was selected that was considerably greater than 0.3mm then the mesh did not function to sufficiently diffuse the pinhole jet of fluid, whereby the fluid was able to retain its energy and human injury would still result.

In the method a number of the mesh screens (Figures 1 to 4) were mounted to an operator's operating cage, using techniques similar to those illustrated in Figures 4A and 4B. The mounting locations corresponded to the mesh panels being spaced from but located with respect to each of the high pressure fluid lines in the vicinity of the cage, so that the mesh was able to receive and diffuse any resultant pinhole jets of high pressure fluid as it passed through the mesh.

Also in the method a number of the mesh sleeves (Figure 6) were mounted to hoses located in the vicinity of various operators, again so that each mesh sleeve was able to receive and diffuse any resultant pinhole jets of high pressure fluid as it passed through the sleeve. The sleeves were able to be sized to surround bundles (bonded sets) of high pressure hoses (e.g. three of more hoses in a bundle). The sleeve was also able to be attached at the point of assembly of the bonded sets.

In a number of trials, a pinhole was formed in a high pressure fluid line not under any pressure and then high pressure was applied to the fluid therein. A pinhole fluid jet of fluid of around 2mm diameter ejected out of the pinhole and was allowed to pass through the mesh of an adjacent panel or sleeve. In each case the jet was observed to diffuse on leaving the panel or sleeve. In this regard, a sampling screen or sampling object (e.g. a cut of meat from a non-human animal) positioned on the other side of the mesh revealed that both the jet's energy (force) and its profile were significantly dissipated/dispersed.

Whilst a number of embodiments of the use of a screening apparatus, the use of a mesh panel and method have been described, it will be appreciated that these can be embodied in many other forms.

For example, it should be noted that the high pressure fluid can issue from other sources, such as leakages in pipe/tube couplings and joiners, from hydraulically or pneumatically powered equipment itself, from other conduits carrying pressured fluid etc. Also, whilst the mesh material typically comprised stainless steel wire woven into a mesh form, the mesh material was able to be selected to be suitable to the given application whilst still producing the diffusion/dispersion effect. For example, other "inert" metals such as copper or galvanised steel could be employed for the mesh. Also high strength polymers may be applicable in some low pressure fluid applications.

Also, when the location is a high pressure hose, pipe or tube, the high pressure fluid was typically a hydraulic fluid (e.g. a synthetic compound, a mineral oil, water, or a water-based mixture) at pressures of tens of thousands of kPa. However, in other applications the fluid may alternatively comprise a high pressure gas, or another pressurised liquid not necessarily being employed to power hydraulic equipment.

In the claims which follow and in the preceding description, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments.

## Claims

1. Use of a mesh panel (10, 10', 20, 30, 40, 50, 60) in screening a user from direct impact of a high pressure fluid (J) issuing from a hole resulting from the rupture of a high pressure hose, pipe or tube (H), **characterized in that** the mesh of the panel (10, 10', 20, 30, 40, 50, 60) is adapted for receiving and diffusing the high pressure fluid therethrough when the mesh of the panel (10, 10', 20, 30, 40, 50, 60) is positioned at a location that is separated from the high pressure hose, pipe or tube where the high pressure fluid (J) issues.

2. The use of a mesh (10, 10', 20, 30, 40, 50, 60) as claimed in claim 1 wherein, the mesh panel (10, 10', 20, 30, 40, 50, 60) is adapted for being supported at a frame (72).

3. Use of a screening apparatus (70, 70') for screening a user from direct impact of a high pressure fluid (J), the apparatus (70, 70') comprising:
- a mesh panel (10, 10', 20, 30, 40, 50, 60) as defined in claim 1; and
- a frame (72) for supporting the mesh (10, 10', 20, 30, 40, 50, 60) in a spaced relationship to a location from which the high pressure fluid (J) issues.

4. The use of a mesh panel (10, 10', 20, 30, 40, 50, 60) or screening apparatus (70, 70') as claimed in claim 2 or 3 wherein the entire mesh (10, 20, 30, 40, 50, 60) or edge(s) of the mesh (10') are reinforced for fastening with respect to the frame (72).

5. The use of a mesh panel (10, 10', 20, 30, 40, 50, 60) or screening apparatus (70, 70') as claimed in any one of claims 2 to 4 wherein the frame (72) forms part of a cage for screening the user in use.

6. The use of a mesh panel (10, 10', 20, 30, 40, 50, 60) or screening apparatus (70, 70') as claimed in any one of the preceding claims wherein the mesh panel (10, 10', 20, 30, 40, 50, 60) is reinforced with a polymeric rubber (14).

7. The use of a mesh panel (10, 10', 20, 30, 40, 50, 60) or screening apparatus (70, 70') as claimed in any one of the preceding claims wherein the mesh (10, 10', 20, 30, 40, 50, 60) is coated or moulded on one or both sides with a polymeric rubber (14).

8. The use of a mesh panel (10, 10', 20, 30, 40, 50, 60) or screening apparatus (70, 70') as claimed in any one of claims 3 to 7 wherein the mesh panel (10, 10', 20, 30, 40, 50, 60) has a series of holes (12) along its edge(s) for enabling its fastening to the frame (72).

9. The use of a mesh panel (10, 10', 20, 30, 40, 50, 60) or screening apparatus (70, 70') as claimed in any one of the preceding claims wherein the mesh of the panel (10, 10', 20, 30, 40, 50, 60) is formed from metal wire, such as woven stainless steel wire.

10. The use of a mesh panel (10, 10', 20, 30, 40, 50, 60) or screening apparatus (70, 70') as claimed in claim 9 wherein, for a fluid (J) pressure of around 34,500 kPa (5000 psi), the mesh (10, 10', 20, 30, 40, 50, 60) aperture size is in the range of 0.26 - 0.31mm, and for a fluid (J) pressure of around 41,300 kPa (6000 psi), the mesh (10, 10', 20, 30, 40, 50, 60) aperture size is in the range of 0.31 - 0.415mm.

11. A method for screening a user from direct impact of a high pressure fluid (J) by a mesh panel, said fluid issuing from a hole resulting from the rupture of a high pressure hose, pipe or tube (L) the method comprising the steps:
- selecting a mesh (10, 10', 20, 30, 40, 50, 60)
- positioning the mesh (10, 10', 20, 30, 40, 50, 60) at a location that is separated from where the high pressure fluid (J) issues such that in use a fluid stream that may escape from the hole resulting from the rupture of the high pressure hose, pipe or tube is received and diffused by the mesh panel (10, 10', 20, 30, 40, 50, 60) wherein the mesh is adapted to the fluid stream so that the fluid stream is diffused by the mesh (10, 10', 20, 30, 40, 50, 60) as it passes through the mesh (10, 10', 20, 30, 40, 50, 60).

12. A method as claimed in claim 11 wherein the mesh (10, 10', 20, 30, 40, 50, 60) is supported at the location by mounting it to a frame (72).

13. A method as claimed in claim 12 wherein the frame (72) is arranged at a cage that at least partially surrounds the user in use.

14. A method as claimed in any one of claims 11 to 13 wherein, for a high pressure hydraulic fluid (J) at a pressure of around 34,500 kPa (5000psi), the mesh (10, 10', 20, 30, 40, 50, 60) aperture size is selected to be in the range of 0.26 - 0.31mm, and for a fluid (J) pressure of around 41,300 kPa (6000 psi), the mesh (10, 10', 20, 30, 40, 50, 60) aperture size is in the range of 0.31 - 0.415mm.

15. A method as claimed in any one of claims 11 to 14 wherein the mesh (10, 10', 20, 30, 40, 50, 60) material selected is stainless steel wire that is woven to form the mesh (10, 10', 20, 30, 40, 50, 60).

16. A method as claimed in any one of claims 11 to 15 wherein the location from which the high pressure fluid (J) issues is a hole (P) in a high pressure hose, pipe or tube (L), whereby the diffusion is effected remotely from the hose, pipe or tube (L).

## Patentansprüche

1. Verwendung einer Gitterplatte (10, 10', 20, 30, 40, 50, 60) zum Abschirmen eines Benutzers gegen die direkte Einwirkung eines Hochdruckfluids (J), das aus einer Öffnung austritt, die sich durch Bruch eines Hochdruckschlauchs, einer Hochdruckleitung oder eines Hochdruckrohrs (H) gebildet hat,
**dadurch gekennzeichnet, dass**
das Gitter der Platte (10, 10', 20, 30, 40, 50, 60) dazu ausgebildet ist, dass es das Hochdruckfluid aufnimmt und dort hindurch zerstreut, wenn das Gitter der Platte (10, 10', 20, 30, 40, 50, 60) an einer Stelle positioniert ist, die von dem Hochdruckschlauch, der Hochdruckleitung oder dem Hochdruckrohr, aus dem das Hochdruckfluid (J) austritt, abgesondert ist.

2. Verwendung eines Gitters (10, 10', 20, 30, 40, 50, 60) nach Anspruch 1, wobei die Gitterplatte (10, 10', 20, 30, 40, 50, 60) dazu ausgebildet ist, dass sie an einem Rahmen (72) gehalten ist.

3. Verwendung einer Abschirmvorrichtung (70, 70') zum Abschirmen eines Benutzers gegen die direkte Einwirkung eines Hochdruckfluids (J), wobei die Vorrichtung (70, 70') umfasst:
- eine Gitterplatte (10, 10', 20, 30, 40, 50, 60) nach Anspruch 1, und
- einen Rahmen (72) zum Halten des Gitters (10, 10', 20, 30, 40, 50, 60) in einem Abstand von einer Stelle, aus der das Hochdruckfluid (J) austritt.

4. Verwendung einer Gitterplatte (10, 10', 20, 30, 40, 50, 60) oder einer Abschirmvorrichtung (70, 70') nach Anspruch 2 oder 3, wobei das gesamte Gitter (10, 20, 30, 40, 50, 60) oder eine oder mehrere Kante(n) des Gitters (10') zur Befestigung am Rahmen (72) verstärkt sind.

5. Verwendung einer Gitterplatte (10, 10', 20, 30, 40, 50, 60) oder einer Abschirmvorrichtung (70, 70') nach einem der Ansprüche 2 bis 4, wobei der Rahmen (72) als Teil eines Käfigs zum Abschirmen des Benutzers bei der Verwendung ausgebildet ist.

6. Verwendung einer Gitterplatte (10, 10', 20, 30, 40, 50, 60) oder einer Abschirmvorrichtung (70, 70') nach einem der vorhergehenden Ansprüche, wobei die Gitterplatte (10, 10', 20, 30, 40, 50, 60) mit einem Polymerkautschuk (14) verstärkt ist.

7. Verwendung einer Gitterplatte (10, 10', 20, 30, 40, 50, 60) oder einer Abschirmvorrichtung (70, 70') nach einem der vorhergehenden Ansprüche, wobei das Gitter (10, 10', 20, 30, 40, 50, 60) auf einer oder beiden Seiten mit einem Polymerkautschuk (14) beschichtet oder dieser daran angeformt ist.

8. Verwendung einer Gitterplatte (10, 10', 20, 30, 40, 50, 60) oder einer Abschirmvorrichtung (70, 70') nach einem der Ansprüche 3 bis 7, wobei die Gitterplatte (10, 10', 20, 30, 40, 50, 60) eine Reihe von Öffnungen (12) entlang einer oder mehrerer ihrer Kante(n) aufweist, die ihre Befestigung am Rahmen (72) ermöglichen.

9. Verwendung einer Gitterplatte (10, 10', 20, 30, 40, 50, 60) oder einer Abschirmvorrichtung (70, 70') nach einem der vorhergehenden Ansprüche, wobei das Gitter der Platte (10, 10', 20, 30, 40, 50, 60) aus Metalldraht, wie einem Edelstahldrahtgewebe, gebildet ist.

10. Verwendung einer Gitterplatte (10, 10', 20, 30, 40, 50, 60) oder einer Abschirmvorrichtung (70, 70') nach Anspruch 9, wobei für einen Druck des Fluids (J) von etwa 34.500 kPa (5000 psi) die Maschenweite des Gitters (10, 10', 20, 30, 40, 50, 60) im Bereich von 0,26 bis 0,31 mm liegt und für einen Druck des Fluids (J) von etwa 41.300 kPa (6000 psi) die Maschenweite des Gitters (10, 10', 20, 30, 40, 50, 60) im Bereich von 0,31 bis 0,415 mm liegt.

11. Verfahren zum Abschirmen eines Benutzers gegen die direkte Einwirkung eines Hochdruckfluids (J) durch eine Gitterplatte, wobei das Fluid aus einer Öffnung austritt, die sich durch Bruch eines Hochdruckschlauchs, einer Hochdruckleitung oder eines Hochdruckrohrs (L) gebildet hat, wobei das Verfahren die Schritte umfasst:
- Auswählen eines Gitters (10, 10', 20, 30, 40, 50, 60),
- Positionieren des Gitters (10, 10', 20, 30, 40, 50, 60) an einer Stelle, die von der, an der das Hochdruckfluid (J) austritt, derart abgesondert ist, dass bei der Verwendung ein Fluidstrom, der aus der Öffnung entweichen kann, die sich durch den Bruch des Hochdruckschlauchs, der Hochdruckleitung oder des Hochdruckrohrs gebildet hat, von der Gitterplatte (10, 10', 20, 30, 40, 50, 60) aufgenommen und zerstreut wird, wobei das Gitter für den Fluidstrom so ausgebildet ist, dass der Fluidstrom durch das Gitter (10, 10', 20, 30, 40, 50, 60) zerstreut wird, wenn er das Gitter (10, 10', 20, 30, 40, 50, 60) passiert.

12. Verfahren nach Anspruch 11, wobei das Gitter (10, 10', 20, 30, 40, 50, 60) dadurch an der Stelle gehalten wird, dass es an einem Rahmen (72) angebracht wird.

13. Verfahren nach Anspruch 12, wobei der Rahmen (72) an einem Käfig angeordnet wird, der bei der Verwendung den Benutzer mindestens teilweise umgibt.

14. Verfahren nach einem der Ansprüche 11 bis 13, wobei für ein Hochdruckhydraulikfluid (J) bei einem Druck von etwa 34.500 kPa (5000 psi) die Maschenweite des Gitters (10, 10', 20, 30, 40, 50, 60) im Bereich von 0,26 bis 0,31 mm ausgewählt wird und für einen Druck des Fluids (J) von etwa 41.300 kPa (6000 psi) die Maschenweite des Gitters (10, 10', 20, 30, 40, 50, 60) im Bereich von 0,31 bis 0,415 mm ausgewählt wird.

15. Verfahren nach einem der Ansprüche 11 bis 14, wobei das ausgewählte Material des Gitters (10, 10', 20, 30, 40, 50, 60) Edelstahldraht ist, der zum Ausbilden des Gitters (10, 10', 20, 30, 40, 50, 60) verwoben wird.

16. Verfahren nach einem der Ansprüche 11 bis 15, wobei die Stelle, aus der das Hochdruckfluid (J) austritt, eine Öffnung (P) in einem Hochdruckschlauch, einer Hochdruckleitung oder einem Hochdruckrohr (L) ist, wodurch die Zerstreuung fern von dem Schlauch, der Leitung oder dem Rohr (L) bewirkt wird.

## Revendications

1. Utilisation d'un panneau (10, 10', 20, 30, 40, 50, 60) en maillage pour protéger un utilisateur de l'impact direct d'un fluide (J) à haute pression jaillissant d'un trou résultant de la rupture d'un flexible, conduit ou tube (H) à haute pression,
**caractérisé en ce que**
le maillage du panneau (10, 10', 20, 30, 40, 50, 60) est prévu pour recevoir et diffuser le fluide à haute pression à travers celui-ci lorsque le maillage du panneau (10, 10', 20, 30, 40, 50, 60) est positionné à un emplacement qui est séparé du flexible, conduit ou tube à haute pression où jaillit le fluide (J) à haute pression.

2. Utilisation d'un maillage (10, 10', 20, 30, 40, 50, 60) selon la revendication 1, le panneau (10, 10', 20, 30, 40, 50, 60) en maillage étant prévu pour être soutenu sur un cadre (72).

3. Utilisation d'un appareil (70, 70') de protection pour protéger un utilisateur de l'impact direct d'un fluide (J) à haute pression, l'appareil (70, 70') comportant :
- un panneau (10, 10', 20, 30, 40, 50, 60) en maillage selon la revendication 1 ; et
- un cadre (72) servant à soutenir le maillage (10, 10', 20, 30, 40, 50, 60) dans une position espacée par rapport à un emplacement d'où jaillit le fluide (J) à haute pression.

4. Utilisation d'un panneau (10, 10', 20, 30, 40, 50, 60) en maillage ou d'un appareil (70, 70') de protection selon la revendication 2 ou 3, le maillage (10, 20, 30, 40, 50, 60) entier, ou un ou des bords du maillage (10') étant renforcés en vue d'une fixation par rapport au cadre (72).

5. Utilisation d'un panneau (10, 10', 20, 30, 40, 50, 60) en maillage ou d'un appareil (70, 70') de protection selon l'une quelconque des revendications 2 à 4, le cadre (72) faisant partie d'une cage servant à protéger l'utilisateur en cours d'utilisation.

6. Utilisation d'un panneau (10, 10', 20, 30, 40, 50, 60) en maillage ou d'un appareil (70, 70') de protection selon l'une quelconque des revendications précédentes, le panneau (10, 10', 20, 30, 40, 50, 60) en maillage étant renforcé à l'aide d'un caoutchouc polymérique (14).

7. Utilisation d'un panneau (10, 10', 20, 30, 40, 50, 60) en maillage ou d'un appareil (70, 70') de protection selon l'une quelconque des revendications précédentes, le maillage (10, 10', 20, 30, 40, 50, 60) étant revêtu ou moulé sur un ou les deux côtés à l'aide d'un caoutchouc polymérique (14).

8. Utilisation d'un panneau (10, 10', 20, 30, 40, 50, 60) en maillage ou d'un appareil (70, 70') de protection selon l'une quelconque des revendications 3 à 7, le panneau (10, 10', 20, 30, 40, 50, 60) en maillage présentant une série de trous (12) le long de son ou de ses bord(s) pour permettre sa fixation au cadre (72).

9. Utilisation d'un panneau (10, 10', 20, 30, 40, 50, 60) en maillage ou d'un appareil (70, 70') de protection selon l'une quelconque des revendications précédentes, le maillage du panneau (10, 10', 20, 30, 40, 50, 60) étant formé d'un fil métallique, comme un fil tissé en acier inoxydable.

10. Utilisation d'un panneau (10, 10', 20, 30, 40, 50, 60) en maillage ou d'un appareil (70, 70') de protection selon la revendication 9, la taille des ouvertures du maillage (10, 10', 20, 30, 40, 50, 60) se situant dans la plage de 0,26 à 0,31 mm pour une pression de fluide (J) d'environ 34500 kPa (5000 psi), et la taille des ouvertures du maillage (10, 10', 20, 30, 40, 50, 60) se situant dans la plage de 0,31 à 0,415 mm pour une pression de fluide (J) d'environ 41300 kPa (6000 psi).

11. Procédé pour protéger un utilisateur de l'impact direct d'un fluide (J) à haute pression par un panneau en maillage, ledit fluide jaillissant d'un trou résultant de la rupture d'un flexible, conduit ou tube à haute pression (L), le procédé comportant les étapes consistant à :
- sélectionner un maillage (10, 10', 20, 30, 40, 50, 60)
- positionner le maillage (10, 10', 20, 30, 40, 50, 60) à un emplacement qui est séparé de l'endroit où jaillit le fluide (J) à haute pression de telle façon qu'en cours d'utilisation, un courant de fluide qui pourrait s'échapper du trou résultant de la rupture du flexible, conduit ou tube à haute pression soit reçu et diffusé par le panneau (10, 10', 20, 30, 40, 50, 60) en maillage, le maillage étant adapté au courant de fluide de telle façon que le courant de fluide soit diffusé par le maillage (10, 10', 20, 30, 40, 50, 60) tandis qu'il passe à travers le maillage (10, 10', 20, 30, 40, 50, 60).

12. Procédé selon la revendication 11, le maillage (10, 10', 20, 30, 40, 50, 60) étant soutenu à l'emplacement en le montant sur un cadre (72).

13. Procédé selon la revendication 12, le cadre (72) étant disposé au niveau d'une cage qui entoure au moins partiellement l'utilisateur en cours d'utilisation.

14. Procédé selon l'une quelconque des revendications 11 à 13, la taille des ouvertures du maillage (10, 10', 20, 30, 40, 50, 60) étant choisie de façon à se situer dans la plage de 0,26 à 0,31 mm pour un fluide hydraulique (J) à haute pression à une pression d'environ 34500 kPa (5000 psi), et la taille des ouvertures du maillage (10, 10', 20, 30, 40, 50, 60) se situant dans la plage de 0,31 à 0,415 mm pour une pression de fluide (J) d'environ 41300 kPa (6000 psi).

15. Procédé selon l'une quelconque des revendications 11 à 14, le matériau choisi du maillage (10, 10', 20, 30, 40, 50, 60) étant un fil en acier inoxydable qui est tissé pour former le maillage (10, 10', 20, 30, 40, 50, 60).

16. Procédé selon l'une quelconque des revendications 11 à 15, l'emplacement d'où jaillit le fluide (J) à haute pression étant un trou (P) dans un flexible, conduit ou tube à haute pression (L), la diffusion étant effectuée à distance du flexible, conduit ou tube (L).
